# EUROPEAN PATENT SPECIFICATION

(11) **EP 3 171 381 B1**
(45) Date of publication and mention of the grant of the patent: **04.09.2024**
(21) Application number: 16199599.8
(22) Date of filing: 18.11.2016
(51) Int. Cl.: H01H 9/52, H01H 1/62, H01H 1/38

(54) **CONTACT STRUCTURE OF A CIRCUIT BREAKER**
KONTAKTSTRUKTUR EINES SCHUTZSCHALTERS
STRUCTURE DE CONTACT D'UN DISJONCTEUR

(30) Priority: 20.11.2015 IN 1183KO2015
(43) Date of publication of application: 24.05.2017
(73) Proprietor: Siemens Aktiengesellschaft, 80333 München (DE)
(72) Inventor: KOLHAPURE, Viraj, Navi Mumbai, Maharashtra (IN)
(74) Representative: Patentanwaltskanzlei WILHELM & BECK

(56) References cited:
- EP-A1- 2 887 373
- GB-A- 911 877
- JP-A- 2001 006 502
- KR-A- 20090 085 975
- US-A- 5 753 875
- DATABASE WPI Week 201116, Derwent World Patents Index; AN 2010-Q85845, XP002768070
- DATABASE WPI Week 201158, Derwent World Patents Index; AN 2011-K39419, XP002768071
- DATABASE WPI Week 201116, Derwent World Patents Index; AN 2011-A83306, XP002768072

## Description

The present invention relates to a contact structure of a circuit breaker having a contact piece and at least one contact arm attached to the contact piece.

The present invention also relates to circuit breaker cabinet.

Such a contact structure and such circuit breaker cabinet are already disclosed in US8835782. The contact structure disclosed therein includes contact arms that are used to connect a circuit breaker to contacts of a circuit breaker assembly. The contact arms include annular rings located around each of the contact arms for convective heat rejection. Since the annular rings are provided around each of the contact arms, the heat rejected by the annular rings is not streamlined, rather is dispersed around each of the contact arms. This dispersed heat rejection results in ineffectively cooling of the contact arms.

CN 201655660U discloses a large-current vacuum circuit breaker comprising an insulation case, a vacuum arc extinguishing chamber, an upper touch arm and a lower touch arm, wherein the left end surface of the upper touch arm is connected with a heat radiation fin arranged in the insulation housing. Further, CN 201655660U states that the epoxy resin insulating housing features a hot-air channel in the epoxy resin insulation housing is provided with a built-in heat sink, the heat sink and the contact arm connection. Exit of the hot air has a dust cover to prevent dust from entering.

US 5753875A discloses a vacuum interrupter provided with heat radiating means fixed to one or both of the contact stems between the vacuum bottle and the junction of the contact stem with a current conductor. The heat radiating means is a heat sink includes the laminations that mount directly into the copper stem. The "saw-tooth" pattern of the connection embeds the heat sink into the copper stem. This prevents the heat sink from disengaging during operation.

GB 911877A discloses a rotary contact arm for high-frequency currents of high intensity. The contact arm includes a metal sleeve which is concentrically arranged about a second metal sleeve. In order to dissipate this heat, the sleeve is provided with a number of cooling fins which extend substantially at right angles to the direction of length of the arm and the outer portions of which are bent so as to prevent them from engaging the coil. These cooling fins are integral with a metal sheath which closely fits about the upper portion of the sleeve.

CN 201910333 electrical connection terminals electrically connected to terminals of a switching device, such as a circuit breaker. The electrical connection terminals include heat sink is formed by a series of air-cooling fins.

Document KR 2009 0085975 A discloses a main circuit terminal assembly for vacuum circuit breaker.

Document EP 2 887 373 A1 discloses a terminal structure of a main circuit part of a vacuum circuit breaker.

Further, the annular rings on the contact arm are not detachable and are necessarily provided at the design stage of the contact arm. Additionally, since the annular rings are not detachable, they cannot be replaced when damaged.

Therefore, it is an object of the present invention to provide a contact structure and a circuit breaker cabinet of the aforementioned kind with improved heat rejection from the contact arms.

The invention achieves this object in that the contact arm is provided with a detachable connecting means on the contact arm. Further, a plurality of ribs are formed on the detachable connecting means, whereby the plurality of ribs define one or more one cooling paths.

The invention also solves the said problem by a circuit breaker cabinet comprising a multi pole circuit breaker providing a plurality of contact structures according to the invention.

According to the present invention, a contact structure of a circuit breaker according to claim 1 is provided. The contact structure can be part of any type of circuit breaker, such as low, medium or high voltage or vacuum, air or gas circuit breakers. In a preferred embodiment, the circuit breaker is a medium voltage air insulated circuit breaker. The contact structure includes a contact piece with one or more contact arms attached to the contact piece. Each of the contact arms extend from the contact piece towards its connection part with the remaining components of the circuit breaker. At least one contact arm comprises two sidewalls with surfaces. The contact structure further includes a detachable connecting means provided on the contact arm. The detachable connecting means is attached or detached from the contact arm using a fastening means. Generally, the fastening means comprises of a nut and bolt assembly. For example, the fastening means includes a hex nut and bolt to fasten the detachable means to the contact arm. Furthermore, the contact structure includes a plurality of ribs formed on the detachable connecting means. The ribs are arranged on the detachable connecting means to define one or more cooling paths. For example, the ribs are arranged parallel to each other and a cool air flow is introduced onto the ribs. The ribs streamline the cool air flow such that the cool air flows between the ribs arranged in parallel. The cooling paths formed between the ribs facilitate heat dissipation from the contact arm. The detachable connecting means is provided at the surfaces of the contact arm. The detachable connecting means is a flat plate comprising a contact arm side attached to the at least one contact arm and a rib side attached to the plurality of ribs. The plurality of ribs comprises middle ribs and outer ribs, wherein a rib length of the outer ribs uniformly increases towards the middle ribs, proportional to the outer contour of the flat plate, and wherein the outer contour of the flat plate is circular

To ensure proper switching function of the circuit breaker, it is necessary that the detachable connecting means and the ribs are made up of insulators. For example, to ensure that the detachable connecting means and the ribs act as insulators, it is preferable that the volume resistivity of the detachable connecting means and the ribs is 10¹³Ωcm for a circuit breaker with 12kV rating.

Additionally, for higher heat dissipation from the contact arms it is advantageous for the detachable connecting means and the ribs to have high thermal conductivity. Accordingly, the detachable connecting means and the ribs are made up of insulators with high thermal conductivity. In a preferred embodiment the detachable connecting means and the ribs have high thermal conductivity of 24 W/m.K for a circuit breaker with 12KV rating.

The detachable connecting means and the ribs together act as a detachable heat sink and advantageously increase the surface area of the contact arm. The increase in surface area is advantageous as it results in higher heat dissipation from the contact arm. Also, since the heat sink is detachable, it can be easily provided the contact arm to improve the temperature rating of the circuit breaker. For example, the circuit breaker has current rating of 3150A and a temperature rating of 40°C. The temperature rating of the circuit breaker can be increased from 40°C to 50°C by attaching the heat sink to the contact arm of the circuit breaker. This advantage of higher temperature rating can be achieved in all types of circuit breakers.

According to the invention, the detachable connecting means is a flat plate having a contact arm side attached to the contact arm and a rib side attached to the ribs. In this the contact arm includes a flat arm surface that receives the flat plate on the contact arm side. The ribs formed on the rib side of the flat plate increases the surface area of the contact arm, which advantageously increases the heat dissipation rate of the contact arm.

According to an embodiment of the invention, the flat plate has an outer contour that defines a rib length of the ribs. In other words, the outer contour of the detachable connecting means determines the dimension of each of the ribs in a vertical axis. For example, if the outer contour of the flat plate (detachable connecting means) is rectangular the rib length of the ribs will be same.

The rib length determines the increase in surface area for heat dissipation from the contact arm. Therefore, it is advantageous to have the ribs with greater rib length for higher heat dissipation. Additionally, it is preferable that the rib length of the ribs is maintained within clearance distance of the circuit breaker. Therefore, it is advantageous to vary the rib length of the ribs such that minimum distance between two conducting material in the circuit breaker is maintained to avoid current leakage. For example, the rib length is provided such that the creepage distance or breakdown voltage is maintained greater than 20KV/mm.

According to the invention, the outer contour of the detachable connecting means is circular. Consequently, the rib length of the ribs varies proportional to the circular contour of the detachable connecting means. Thus, the rib length of the ribs at a center of the detachable connecting means is greater that of the ribs at the ends of detachable connecting means. In other words, the ribs comprise of middle ribs and outer ribs, with the rib length of the outer ribs uniformly increasing towards the middle ribs. Accordingly, the middle ribs formed at the center of the detachable connecting means has higher surface area as compared to the outer ribs. In view of the higher surface area, higher heat dissipation is achieved at the center of the detachable connecting means.

According to another embodiment of the present invention, a circuit breaker cabinet comprising a multi pole circuit breaker is provided. The multi pole circuit breaker includes a plurality of contact pieces as disclosed above. The contact pieces are provided with contact arms, at least one of which includes the detachable connecting means and the plurality of ribs. The ribs define cooling paths on the contact arm on which the detachable connecting means is attached. The cooling paths formed between the ribs advantageously improve heat dissipation from the contact arm.

According to an embodiment of the present invention, the circuit breaker cabinet comprises an air flow duct that defines an air flow in the circuit breaker cabinet. In particular, the air flow duct defines the direction of flow of the cool air flow provided on the ribs. The air flow duct is aligned with the ribs provided on the detachable connecting means on the contact arms. In other words, the air flow duct ensures that the cool air flow is channelized between the ribs by bringing the cool air flow in line with the ribs. By aligning the cool air flow with the ribs, the air flow duct advantageously ensures that the cool air flow is not dispersed in the circuit breaker cabinet, rather is concentrated on the ribs for effective heat dissipation.

In a preferred embodiment of the present invention, the air flow duct comprises an inlet, an outlet and an inner duct opening between the inlet and the ribs. The inlet receives the cool air flow from an external source into the circuit breaker cabinet while hot air from the circuit breaker cabinet is expelled via the outlet. The inner duct opening channelizes the cool air flow received at the inlet onto the ribs. The embodiment operates on the principle that the hot air from the ribs rises because it is less dense than cool air flow. The hot air accumulates at the ribs due to heat dissipation from the contact arms, tends to rise because it is less dense than the cool air flow. The rising hot air creates a pressure difference called draft, which draws the cool air flow towards the ribs while expelling the hot air outside.

According to another embodiment of the present invention, the inner duct opening has a rib side opening facing the ribs and an inlet side opening facing away from the ribs. In a preferred embodiment, the inlet side opening is greater than the rib side opening. In other words, the inner duct opening is tapered with the rib side opening narrower than the inlet side opening. For example, the inner duct opening is configured in a funnel or a chimney shape. The cool air flow from the inlet is channelized at the rib side opening by constricting the cool air flow at the narrow rib side opening. Further, since the rib side opening faces the ribs, the cool air flow is released from the rib side in line with the ribs on the detachable connecting means. Therefore, the inner duct opening advantageously ensures that the cool air flow is concentrated on the ribs for effective heat dissipation.

According to another embodiment of the present invention, the multi pole circuit breaker has three poles, a first pole a middle second pole and a third pole. Accordingly, the contact structure of the multi pole circuit breaker comprises contact pieces that are configured in either first pole, middle second pole or third pole. During the operation of the multi pole circuit breaker, maximum amount of heat is generated around the contact arm of the contact piece configured in the second pole. This is due to the fact that the second pole is sandwiched between the contact piece in the first pole and the third pole. The heat generated at the contact arms of the contact pieces in the first pole and third pole dissipates from sides facing away from the contact piece in the second pole. However, the heat from the contact pieces in the first pole and third pole does not dissipate from sides facing the contact piece in the second pole. Hence, the heat accumulated at the contact arm in the second pole is a combination of the heat generated by the contact arm in the second pole and left over un-dissipated heat from the contact arms in the first pole and the third pole. Therefore, it is advantageous to provide the contact arm in the second pole with the ribs that define the cooling paths.

Accordingly, the detachable connecting means and the ribs are provided on the contact arm of the contact piece in the second pole. The embodiment operates on the principle that the detachable connecting means and the ribs are provided on the contact pieces around which maximum heat is generated. For example, in a three pole circuit breaker has two rows of contact pieces arranged in the three pole configuration. The contact pieces are set in an upper row and a lower row. The contact pieces in upper row are in proximity to the outlet that expels the hot air while the contact pieces in the lower row are in proximity to the inlet that receives the cool air flow. The contact arm of the contact piece in the lower row of the second pole is surrounded by the contact pieces in the first pole and third pole, and the contact piece in the upper row of the second pole. As discussed earlier, the heat accumulated around contact pieces in the second pole is more than the first and third pole as it is sandwiched between the two poles. Similarly, the contact piece in the lower row of the second pole experiences most amount of heat as it is surrounded by the contact pieces in the first pole and third pole, and the contact piece in the upper row of the second pole. Therefore, it is advantageous that the detachable connecting means and the ribs are provided on the contact piece around which maximum heat is generated.
- Figure 1: is a perspective view of a contact structure in accordance with prior art;
- Figure 2: is an isometric view of a contact structure in accordance with the present invention;
- Figure 3A: is a top view of a detachable connecting means and a plurality of ribs in accordance with the present invention;
- Figure 3B: is a side view of the detachable connecting means and the plurality of ribs in accordance with the present invention;
- Figure 4: is a side view of a circuit breaker cabinet in accordance with the present invention;
- Figure 5: is an isometric view of the circuit breaker cabinet having a multi pole circuit breaker in accordance with the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

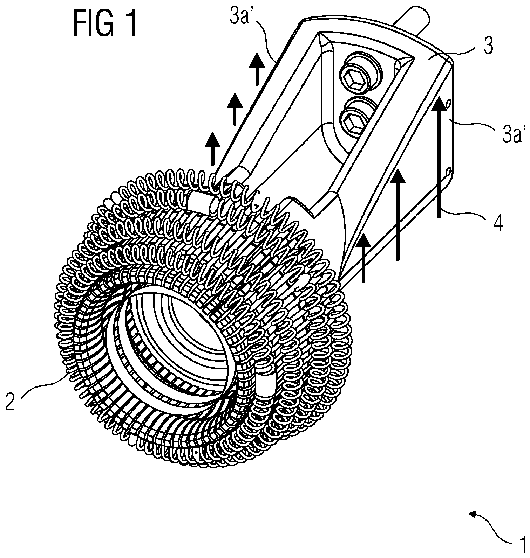

Figure 1 illustrates a perspective view of a contact structure in accordance with prior art. The contact structure 1 of a circuit breaker (not shown in the Figure) includes a contact piece 2 and a contact arm 3 attached to the contact piece 2. During operation of the circuit breaker, heat is generated at the contact piece 2 and the contact arm 3. This heat is expelled out of the circuit breaker by an air flow 4 provided along surfaces 3a'of the contact arm 3. Therefore, the contact arm 3 itself acts as a heat dissipating agent and the heat dissipation is proportional to surface area of the contact arm. Accordingly, to improve the heat dissipation and temperature rating of the circuit breaker, the size of the contact arm must be increased, which results in increase in the size of the contact piece. For example, the contact structure 1 with the contact arm 3 provided in an air circuit breaker with current rating of 3150A has a temperature rating of 40°C. To increase the temperature rating to 50°C, a new contact structure with bigger contact arm and contact piece must be designed. This re-designing of the contact structure results in change in the circuit breaker design, which is not desirable.

In the present invention, the surface area for heat dissipation is increased without increasing the size of the contact arm 3.

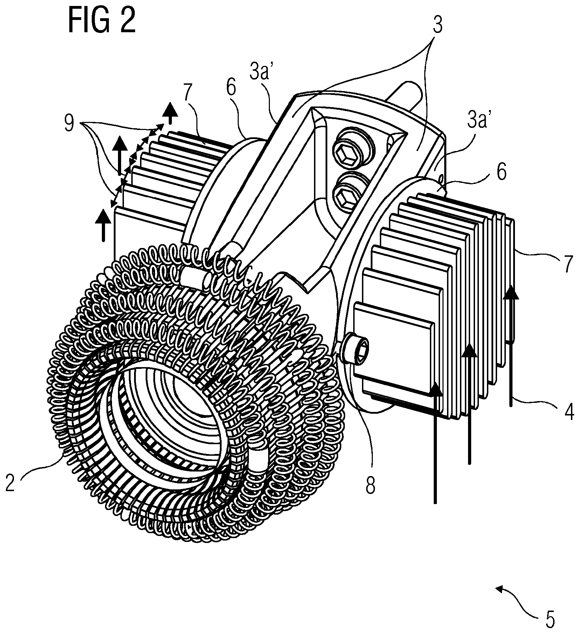

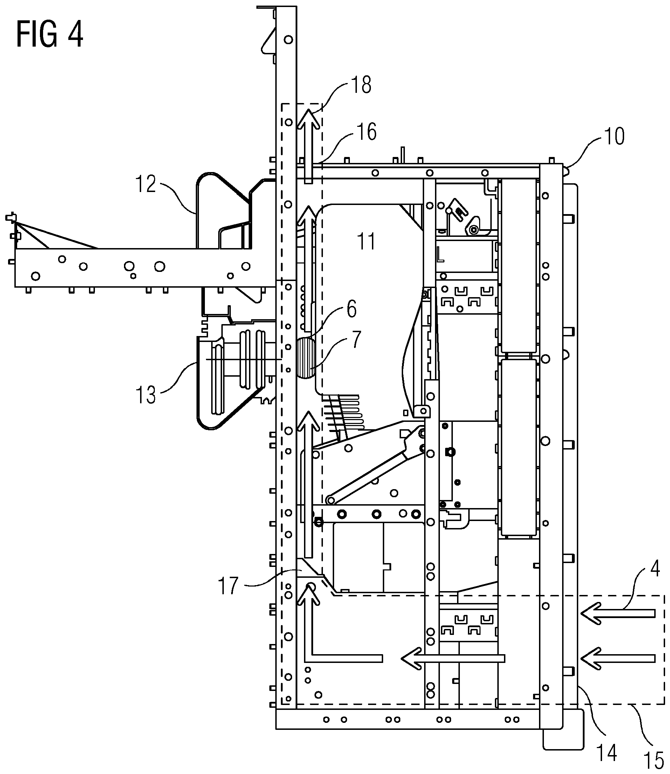

Figure 2 illustrates an isometric view of a contact structure 5 in accordance with the present invention. The contact structure 5 comprises the contact piece 2 and the contact arm 3 attached to the contact piece 2. The contact arm 3 includes the surfaces 3a' on which a detachable connecting means 6 is fastened on a contact arm side of the detachable connecting means, using a fastening means 8. As shown in the figure, the fastening means is a hex type nut and bolt assembly. Further, the contact structure 5 includes a plurality of ribs 7 that are formed on the detachable connecting means 6. The ribs 7 are formed on a rib side of the detatachable connecting means, opposite to the contact arm side. The ribs 7 are arranged in line with the air flow 4, which is depicted using arrows parallel to the ribs 7. The air flow 4 is usually a cool air flow that is directed towards the ribs 7 by an air flow duct (shown in Figure 4).

The detachable connecting means 6 and the ribs 7 are insulators that have high thermal conductivity. As a result, the heat generated at the contact arm 3 is transmitted to the detachable connecting means 6 and the ribs 7, from which the heat is dissipated. The detachable connecting means 6 and the ribs 7 increase the surface area for heat dissipation from the contact arm 3. The increase in surface area is advantageous as it results in higher heat dissipation from the contact structure 5 as compared to the prior contact structure 1. For example, the air circuit breaker configured with the contact structure 5, having current rating of 3150A is capable of achieving a higher temperature rating of around 50°C as compared to the temperature rating of 40°C.

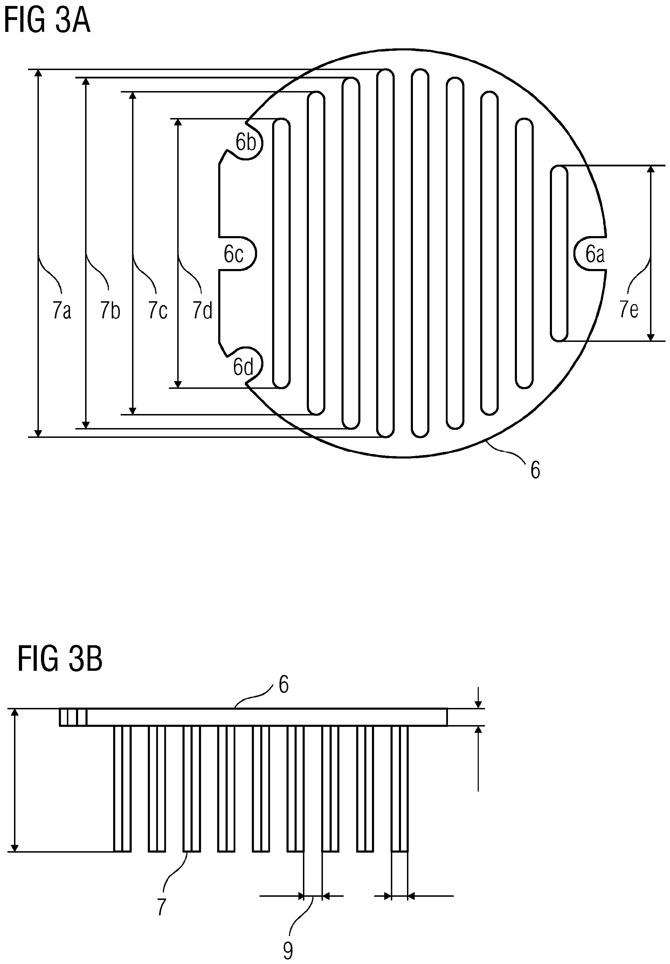

To ensure proper functioning of the circuit breaker, it is imperative that the clearance distance between the contact arm 3 and the circuit breaker is maintained. In the present invention, the dimensions of detachable connecting means 6 and the ribs 7 are configured such that minimum distance between the ribs 7 and the circuit breaker is maintained. Figure 3A and 3B illustrate the preferred dimensions of the detachable connecting means 6 and the ribs 7 to prevent dielectric breakdown caused by the ionization of air and to maintain the clearance or creepage distance.

Figure 3A illustrates a top view of the detachable connecting means 6 and the plurality of ribs 7 in accordance with the present invention. The figure shows the rib side of the detachable connecting means 6. Further, as shown in the figure, the detachable connecting means 6 is a flat plate with a circular contour having slots 6a-6d to fasten the detachable connecting means 6 to the contact arm 3 using the fastening means 8. The circular contour of the detachable connecting means 6 determines a rib length of each of the ribs 7. Accordingly for the circular contour, the rib length of middle ribs 7a is greater than outer ribs 7d and 7e. In the present embodiment, a diameter of the circular contour is 100mm and the rib length of the middle ribs 7a is 90mm while the rib length of the outer ribs 7d and 7e are 66mm and 43mm, respectively. Also, rib length uniformly increases from the outer ribs 7d and 7e towards the middle ribs 7a, illustrated by ribs 7c and 7b having rib lengths of 79mm and 86mm, respectively.

Figure 3B illustrates a side view of the detachable connecting means 6 and the plurality of ribs 7 in accordance with the present invention. The wideness detachable connecting means 6 and the ribs 7 must be configured such that the clearance distance within the circuit breaker is maintained. Therefore, as shown in the figure, the overall width of the detachable connecting means 6 and the ribs 7 is 35mm, with the detachable connecting means 7 having a width of4.25mm. Further, each of the ribs 7 have a thickness of 4mm and are spaced at a distance of 4.5mm from each other, in which the cooling paths 9 are defined.

The cooling paths 9 are formed when the air flow 4 is directed onto the ribs 7. The air flow 4 is directed onto the ribs 7 by means of an air flow duct as shown in Figure 4.

Figure 4 is a side view of a circuit breaker cabinet 10 in accordance with the present invention. The circuit breaker cabinet 10 includes a multi pole circuit breaker 11 comprising a plurality of contact structures. The contact structures include an upper contact structure 12 and a lower contact structure 13. As shown in Figure 4, the lower contact structure 13 includes the contact arms (not seen in Figure 4) on which the detachable connecting means 6 and the ribs 7 are provided. Further, the circuit breaker cabinet 10 includes a High Voltage (HV) door 14 provided with a mess wire. The cool air flow 4 enters the circuit breaker cabinet 10 via the HV door 14, which acts as an inlet of the air flow duct 15. The air flow duct 15 also includes an outlet 16 and an inner duct opening 17 between the inlet HV door 14 and the outlet 16. The air flow duct 15 defines an air flow direction such that hot air 18 from the ribs 7 is expelled via the outlet 16. The hot air 18 is generated due to heat dissipation from the contact arms of the contact structures 12 and 13, tends to rise because it is less dense than the cool air flow 4. Particularly, the hot air 18 from the ribs 7 rises in view of the denser cool air 4 that is directed to the ribs 7 via the inner duct opening 17. The inner duct opening 17 is tapered towards the ribs 7 and, thereby ensures that the cool air flow 4 is aligned with the ribs 7.

The tapered shape is formed by shaping the inner duct opening 17 as a funnel or a chimney. The cool air 4 directed onto the ribs 7 rises as the hot air 18 and creates a pressure difference called draft. This pressure difference draws more of the cool air flow 4 towards the ribs 7 while expelling the hot air 18 outside. Therefore, the arrangement of the inner duct opening 17 and the ribs 7 effectively cools the contact arms of the contact structures 12 and particularly 13.

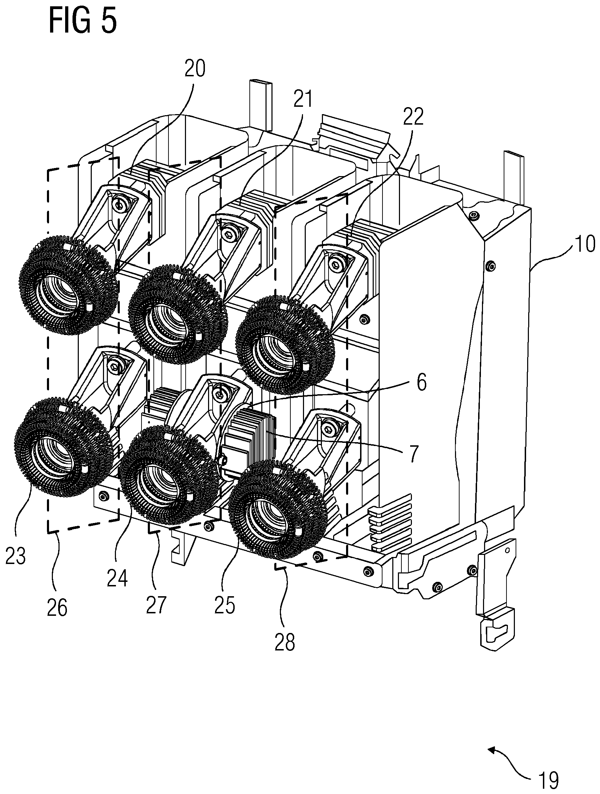

Figure 5 is an isometric view of the circuit breaker cabinet 10 having a three pole circuit breaker 19 in accordance with the present invention. The three pole circuit breaker 19 comprises of a plurality of contact structures 20-25. The contact structures are provided in two rows having an upper row and a lower row. Further, the contact structures are configured in three poles a first pole 26, a middle second pole 27 and a third pole 28. During the operation of the three pole circuit breaker 19, the maximum amount of heat is generated around the contact arms of the contact structures 21 and 24 configured in the second pole 27. This is due to the fact that the second pole is sandwiched between the contact structures 20, 23 and 22, 25 in the first pole 26 and the third pole 28, respectively. The heat generated at the contact arms of the contact structures 20, 22, 23 and 25 dissipates from sides facing away from the contact structures 21 and 24 in the second pole 27. Hence, the heat accumulated at the contact arms of the contact structures 21 and 24 a combination of the heat generated by the contact arms in the second pole 27 and left over un-dissipated heat from the contact arms of contact structures 20, 22, 23 and 25 in the first pole 26 and the third pole 28. Further, as shown in the Figure, contact structure 24 is surrounded by contact structures 21, 23 and 25 and therefore, experiences most amount of heat. Therefore, the contact arm of the contact structure 24 has been provided with the detachable connecting means 6 and the plurality of ribs 7. The ribs 7 define cooling paths on the contact arm of the contact structure 24, and thereby ensuring effective heat dissipation from the three pole circuit breaker 19.

## Claims

1. A contact structure (5) of a circuit breaker having
a contact piece (2);
at least one contact arm (3) attached to the contact piece and comprising two sidewalls with surfaces (3a');
detachable connecting means (6) provided on the surfaces (3a') of the at least one contact arm,
a plurality of ribs (7) formed on the detachable connecting means (6);
wherein the detachable connecting means (6) is a flat plate comprising a contact arm side attached to the at least one contact arm and a rib side attached to the plurality of ribs (7);
wherein the plurality of ribs (7) define at least one cooling path (9), wherein the plurality of ribs (7) comprises middle ribs (7a) and outer ribs (7d, 7e), wherein a rib length of the outer ribs (7d, 7e) uniformly increases towards the middle ribs (7a), proportional to the outer contour of the flat plate, and wherein the outer contour of the flat plate is circular.

2. The contact structure (5) according to the claim 1, wherein an outer contour of the flat plate defines a rib length of each of the plurality of ribs (7).

3. The contact structure (5) according to any of the preceding claims, wherein a diameter of the circular contour is 100 mm, wherein a length of the middle ribs (7a) is 90 mm, wherein a length of the outer ribs (7d, 7e) are 66 mm and 43 mm, respectively, and wherein the lengths of ribs (7c, 7d) are 79 mm and 86 mm, respectively.

4. A circuit breaker cabinet (10) having
a multi pole circuit breaker (11) providing
a plurality of contact structures (12, 13) according to any of the preceding claims 1 to 3.

5. The circuit breaker cabinet (10) according to claim 4, comprising
an air flow duct (15) defining an air flow (4), wherein the air flow duct (15) is aligned with the plurality of ribs (7).

6. The circuit breaker cabinet (10) according to claim 5, wherein the air flow duct (15) comprises an inlet (14), an outlet (16) and an inner duct opening (17) between the inlet and the plurality of ribs (7).

7. The circuit breaker cabinet (10) according to one of the claims 4 to 6, wherein the inner duct opening (17) comprises an rib side opening facing the plurality of ribs (7) and an inlet side opening facing away from the plurality of ribs, with the inlet side opening being greater that the rib side opening.

8. The circuit breaker cabinet (10) according to one of the claims 4 to 7, wherein the contact piece (2) is configured in anyone of a first pole (26), a middle second pole (27) or a third pole (28), wherein the middle second pole (27) is between the first pole (26) and the third pole (28).

9. The circuit breaker cabinet (10) according to one of the claims 5 to 8, wherein the detachable connecting means (6) and the plurality of ribs (7) are provided on the at least one contact arm of the contact piece in the middle second pole (27).

## Patentansprüche

1. Kontaktstruktur (5) eines Leistungsschalters mit
einem Kontaktstück (2);
mindestens einem an dem Kontaktstück angebrachten und zwei Seitenwände mit Oberflächen (3a') umfassenden Kontaktarm (3);
einer auf den Oberflächen (3a') des mindestens einen Kontaktarms bereitgestellten lösbaren Verbindungseinrichtung (6);
mehreren auf der lösbaren Verbindungseinrichtung (6) gebildeten Rippen (7);
wobei die lösbare Verbindungseinrichtung (6) eine ebene Platte ist, die eine an dem mindestens einen Kontaktarm angebrachte Kontaktarmseite und eine an den mehreren Rippen (7) angebrachte Rippenseite umfasst;
wobei die mehreren Rippen (7) mindestens einen Kühlungsweg (9) definieren, wobei die mehreren Rippen (7) mittlere Rippen (7a) und äußere Rippen (7d, 7e) umfassen, wobei eine Rippenlänge der äußeren Rippen (7d, 7e) proportional zum Außenumriss der ebenen Platte zu den mittleren Rippen (7a) hin stetig größer wird und wobei der Außenumriss der ebenen Platte kreisförmig ist.

2. Kontaktstruktur (5) nach Anspruch 1, wobei ein Außenumriss der ebenen Platte eine Rippenlänge jeder der mehreren Rippen (7) definiert.

3. Kontaktstruktur (5) nach einem der vorhergehenden Ansprüche, wobei sich ein Durchmesser des kreisförmigen Umrisses auf 100 mm beläuft, wobei sich eine Länge der mittleren Rippen (7a) auf 90 mm beläuft, wobei sich eine Länge der äußeren Rippen (7d, 7e) auf 66 mm bzw. 43 mm beläuft und wobei sich die Länge von Rippen (7c, 7d) auf 79 mm bzw. 86 mm beläuft.

4. Leistungsschalterschrank (10) mit
einem mehrpoligen Leistungsschalter (11), der
mehrere Kontaktstrukturen (12, 13) nach einem der vorhergehenden Ansprüche 1 bis 3 bereitstellt.

5. Leistungsschalterschrank (10) nach Anspruch 4, umfassend
einen Luftstromkanal (15), der einen Luftstrom (4) definiert, wobei der Luftstromkanal (15) auf die mehreren Rippen (7) ausgerichtet ist.

6. Leistungsschalterschrank (10) nach Anspruch 5, wobei der Luftstromkanal (15) einen Einlass (14), einen Auslass (16) und eine Innenkanalöffnung (17) zwischen dem Einlass und den mehreren Rippen (7) umfasst.

7. Leistungsschalterschrank (10) nach einem der Ansprüche 4 bis 6, wobei die Innenkanalöffnung (17) eine den mehreren Rippen (7) zugewandte Rippenseitenöffnung und eine von den mehreren Rippen abgewandte Einlassseitenöffnung umfasst, wobei die Einlassseitenöffnung größer als die Rippenseitenöffnung ist.

8. Leistungsschalterschrank (10) nach einem der Ansprüche 4 bis 7, wobei das Kontaktstück (2) in einem beliebigen von einem ersten Pol (26), einem mittleren zweiten Pol (27) oder einem dritten Pol (28) ausgebildet ist, wobei sich der mittlere zweite Pol (27) zwischen dem ersten Pol (26) und dem dritten Pol (28) befindet.

9. Leistungsschalterschrank (10) nach einem der Ansprüche 5 bis 8, wobei die lösbare Verbindungseinrichtung (6) und die mehreren Rippen (7) auf dem mindestens einen Kontaktarm des Kontaktstücks in dem mittleren zweiten Pol (27) bereitgestellt sind.

## Revendications

1. Structure de contact (5) d'un disjoncteur présentant une pièce de contact (2) ;
au moins un bras de contact (3) fixé à la pièce de contact et comprenant au moins deux parois latérales avec des surfaces (3a') ;
un moyen de raccordement détachable (6) prévu sur les surfaces (3a') de l'au moins un bras de contact,
un pluralité de nervures (7) formées sur le moyen de raccordement détachable (6) ;
le moyen de raccordement détachable (6) étant une plaque plane comprenant un côté bras de contact fixé à l'au moins un bras de contact et un côté nervure fixé à la pluralité de nervures (7) ;
la pluralité de nervures (7) définissant au moins un chemin de refroidissement (9), la pluralité de nervures (7) comprenant des nervures centrales (7a) et des nervures externes (7d, 7e), une longueur de nervure des nervures externes (7d, 7e) augmentant uniformément vers les nervures centrales (7a), proportionnelle au contour externe de la plaque plane, et le contour extérieur de la plaque plane étant circulaire.

2. Structure de contact (5) selon la revendication 1, un contour externe de la plaque plane définissant une longueur de nervure de chacune de la pluralité de nervures (7).

3. Structure de contact (5) selon l'une quelconque des revendications précédentes, un diamètre du contour circulaire étant de 100 mm, une longueur des nervures centrales (7a) étant de 90 mm, une longueur des nervures externes (7d, 7e) étant de 66 mm et de 43 mm, respectivement, et les longueurs de nervures (7c, 7d) étant de 79 mm et de 86 mm, respectivement.

4. Coffret (10) de disjoncteur présentant
un disjoncteur multipôles (11) fournissant
une pluralité de structures de contact (12, 13) selon l'une quelconque des revendications précédentes 1 à 3.

5. Coffret (10) de disjoncteur selon la revendication 4, comprenant
un conduit (15) de flux d'air définissant un flux d'air (4), le conduit (15) de flux d'air étant aligné avec la pluralité de nervures (7).

6. Coffret (10) de disjoncteur selon la revendication 5, le conduit (15) de flux d'air comprenant un orifice d'entrée (14), un orifice de sortie (16) et une ouverture (17) de conduit interne entre l'orifice d'entrée et la pluralité de nervures (17).

7. Coffret (10) de disjoncteur selon l'une des revendications 4 à 6, l'ouverture (17) de conduit interne comprenant une ouverture côté nervure faisant face à la pluralité de nervures (7) et une ouverture côté orifice d'entrée orientée à l'opposé de la pluralité de nervures, avec l'ouverture côté orifice d'entrée étant plus grande que l'ouverture côté nervure.

8. Coffret (10) de disjoncteur selon l'une des revendications 4 à 7, la pièce de contact (2) étant configurée dans l'un quelconque d'un premier pôle (26), d'un deuxième pôle central (27) ou d'un troisième pôle (28), le deuxième pôle central (27) se situant entre le premier pôle (26) et le troisième pôle (28).

9. Coffret (10) de disjoncteur selon l'une des revendications 5 à 8, le moyen de raccordement détachable (6) et la pluralité de nervures (7) étant prévus sur l'au moins un bras de contact de la pièce de contact dans le deuxième pôle central (27).
